# EUROPÄISCHE PATENTSCHRIFT

(11) **EP 0 383 424 B1**
(45) Veröffentlichungstag und Bekanntmachung des Hinweises auf die Patenterteilung: **26.01.1994**
(21) Anmeldenummer: 90250054.5
(22) Anmeldetag: 16.02.1990
(51) Int. Cl.: G03B 21/64, G03B 21/132

(54) **Maske für einen Overheadprojektor**
Mask for an overhead projector
Cache pour un rétroprojecteur

(30) Priorität: 16.02.1989 DE 3904951
(43) Veröffentlichungstag der Anmeldung: 22.08.1990
(73) Patentinhaber: "DURABLE" HUNKE & JOCHHEIM GMBH & CO. KOMMANDITGESELLSCHAFT, D-58636 Iserlohn (DE)
(72) Erfinder: Maier-Hunke, Horst Werner, D-5860 Iserlohn-Sümmern (DE); Rupprecht, Günter, D-5760 Arnsberg (DE)
(74) Vertreter: Böning, Manfred, Dr.-Ing.

(56) Entgegenhaltungen:
- DE-C- 3 702 877
- DE-U- 8 226 937
- US-A- 2 834 136

## Beschreibung

Die Erfindung betrifft eine Maske für einen Overheadprojektor nach dem Obergriff des Anspruchs 1.

Bei einer aus der DE-C 37 02 877 bekannten Maske der vorstehenden Art besitzt der das Bildfenster begrenzende Rahmen zwei breite Längsholme, die zum Zwecke einer platzsparenden Ablage der Maske in einem Ordner längs zweier paralleler Faltlinien partiell nach innen klappbar sind. Im nach innen geklappten Zustand der Längsholmteile werden während der Ablage der Maske im Ordner die Längsränder einer auf den Rahmen der Maske geklebten Diafolie geschützt, wobei die umgeklappten Längsholmteile vor der Verbindung der Diafolie mit dem Rahmen der Maske zusätzlich als Abdeckstreifen für eine zum Befestigen der Diafolie dienende selbstklebende Beschichtung genutzt werden. Im Hinblick auf die feste Verbindung von Maske und Diafolie ist das Arbeiten mit den bekannten Masken trotz niedriger Gestehungskosten für die einzelne Maske recht kostenintensiv.

Bekannt ist außerdem eine Maske, bei der der Rahmen und eine mit ihm verbundene und sein Bildfenster abdeckende durchsichtige Folie zusammen mit einer weiteren längs mindestens zweier benachbarter Ränder mit dem Rahmen verbundenen durchsichtigen Folie eine Hülle für eine projizierende Vorlage bilden. Auch diese Maske ist im Hinblick darauf, daß sie sowohl die Funktion eines Bildfensterrahmens als auch die Funktion einer Hülle erfüllt, nicht nur verhältnismäßig aufwendig in der Herstellung, sondern sie beansprucht auch vergleichsweise viel Ablageraum und ihre Handhabung ist umständlich.

Eine ebenfalls gleichzeitig als Hülle ausgebildete Maske ist schließlich aus der EP-B 0 047 306 bekannt; sie bildet allerdings keinen geschlossenen Rahmen, sondern weist lediglich seitliche, von Klappen geformte Bildbegrenzungen auf.

Der Erfindung liegt die Aufgabe zugrunde, eine Maske der in Betracht gezogenen Art zu schaffen, die preisgünstig herstellbar sowie leicht handhabbar ist und die in Verbindung mit einer Vielzahl von auf sie maßlich abgestimmten Hüllen wenig Stauraum in Anspruch nimmt. Diese Aufgabe wird erfindungsgemäß durch die Merkmale des Anspruchs 1 gelöst.

Die erfindungsgemäße Maske läßt sich problemlos handhaben, da aufgrund ihrer Ausbildung nicht nur ihre Lage auf dem Projektor, sondern auch die Position der zur Aufnahme einer Diafolie dienenden Hülle einwandfrei definiert ist. Durch die Justierorgane wird darüber hinaus das Arbeiten mit zu Projektionszwecken übereinanderlegbaren, sich ergänzenden Diafolien erleichtert.

Die Erfindung wird im folgenden anhand eines in der beigefügten Zeichnung dargestellten, besonders vorteilhaften Ausführungsbeispieles näher erläutert. Es zeigen:
- Fig. 1: die Draufsicht auf eine aufgeklappte Maske,
- Fig. 2: die Ansicht der Maske gemäß Fig. 1 bei Betrachtung von oben oder unten,
- Fig. 3: die Draufsicht auf die Maske gemäß Fig. 1 im zusammengeklappten Zustand,
- Fig. 4: eine der Fig. 2 entsprechende Ansicht der Maske im zusammengeklappten Zustand,
- Fig. 5: einen Schnitt längs der Linie V-V in Fig. 3,
- Fig. 6: eine der Fig. 5 entsprechende leicht modifizierte Ausführungsform,
- Fig. 7: einen Schnitt längs der Linie VII-VII in Fig. 3,

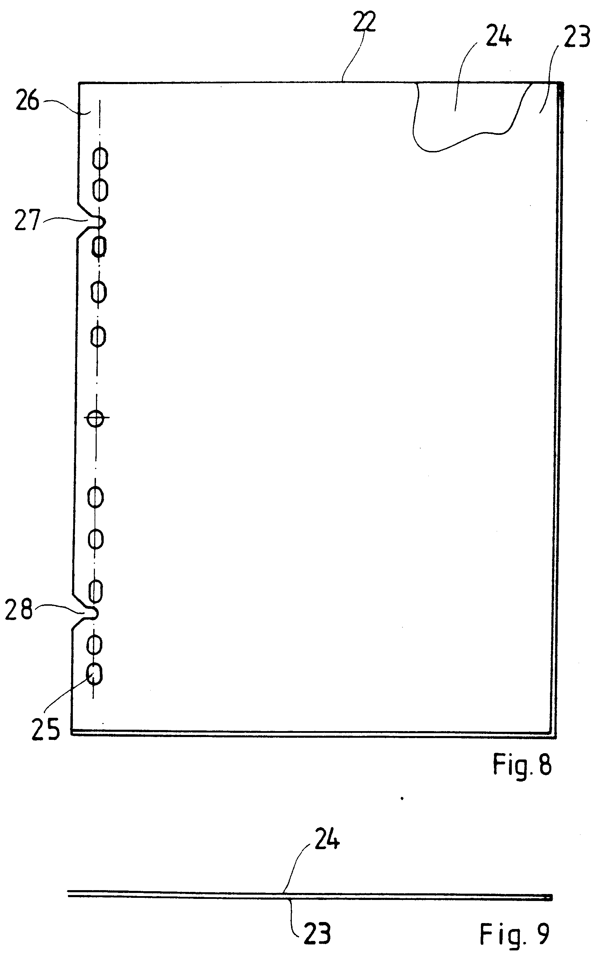

- Fig. 8: die Draufsicht auf eine zusammen mit dem Rahmen verwendbare Hülle und
- Fig. 9: einen Schnitt durch die Hülle gemäß Fig. 8.

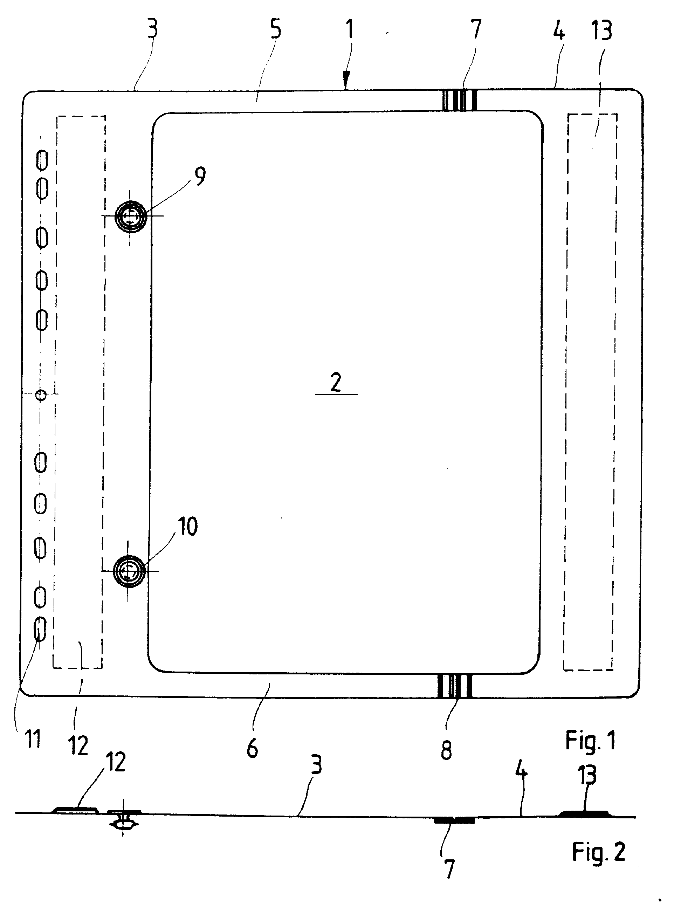

In Figur 1 ist mit 1 allgemein der ein offenes Bildfenster 2 begrenzende Rahmen einer Maske bezeichnet. Der Rahmen 1 besteht aus einem Hauptteil 3 und einem umklappbaren Randabschnitt 4. Der Hauptteil 3 und der Randabschnitt 4 sind im Bereich der Querholme 5 und 6 des Rahmens 1 über Filmscharniere 7 und 8 miteinander verbunden. Die Filmschar niere 7 und 8 bestehen aus Weichfolienstreifen, die mit dem von einer Kunststoffhartfolie gebildeten Rahmen 1 durch Schweißen verbunden sind. Im Bereich des linken Randes des Rahmens 1 ist dieser mit Justierorganen 9 und 10 sowie einer Reihe eingestanzter Löcher 11 versehen, welche zur Ablage des Rahmens und zu seiner Lagearretierung auf einem Overheadprojektor genutzt werden können. An der Rückseite des Rahmens sind streifenförmige Haftelemente 12 und 13 angeordnet.

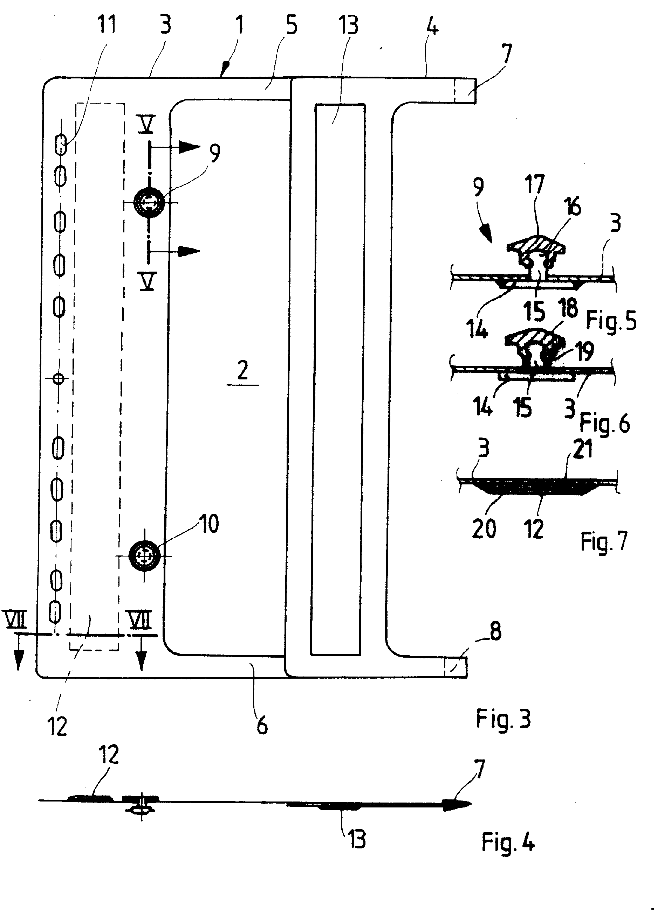

Während in den Figuren 1 und 2 der aufgeklappte Rahmen so, wie er auf der Glasscheibe eines Overheadprojektors zu liegen kommt, dargestellt ist, zeigen die Figuren 3 und 4 den Rahmen im zusammengeklappten Zustand, d.h. in dem Zustand, in dem er in einem Ordner abgeheftet werden kann.

Einzelheiten der Justierorgane 9 bzw. 10 für eine Folie oder Hülle ergeben sich aus der Figur 5. Man erkennt, daß die Justierorgane einen tellerförmigen Fußteil 14 und einen mit diesem einstückig ausgebildeten Schaft 15 aufweisen, dessen Ende 16 ballenartig ausgebildet ist. Auf dem ballenartigen Ende 16 des Schaftes ist nach Art eines Druckknopfes ein Kopfteil 17 aufgesetzt. Bei dem dargestellten Ausführungsbeispiel ist der Fußteil 14 mit dem Hauptteil 3 des Rahmens 1 verschweißt.

Auf die Schweißung kann bei einer in Figur 6 dargestellten Modifikation verzichtet werden. Im Falle der abgewandelten Ausführungsform gemäß Figur 6 wird ein Kopfteil 18 verwendet, der einen Ringbund 19 aufweist, welcher den Schaft 15 umschließt. In diesem Falle wird der Rahmen 3 zwischen der Stirnseite des Ringbundes 19 und dem tellerförmigen Fußteil 14 festgeklemmt.

Figur 7 zeigt Einzelheiten des Aufbaus der Haftelemente 12 bzw. 13. Jedes Haftelement besteht aus einem Lackfolienstreifen 20, der durch ein doppelseitig klebendes Klebeband 21 mit dem jeweiligen Rahmenteil verbunden ist.

Bei der Anwendung der beschriebenen Maske wird das in Figur 1 gezeigte Fenster 2 durch eine Hülle 22 abgedeckt, die aus zwei längs mindestens zweier Ränder miteinander verbundenen durchsichtigen Kunststoffolien 23 und 24 besteht. Die Hülle 22 verfügt über eine Reihe von Löchern 25, deren Anordnung der Anordnung der Löcher 11 entspricht. An ihrem die Lochreihe aufweisenden Längsrand 26 ist sie mit Justierkerben 27 und 28 versehen, welche bei der Wiedergabe einer in der Hülle 22 aufbewahrten Vorlage die Schäfte 15 der Justierorgane 9 und 10 eng umschließen. Die Justierorgane 9 und 10 lassen sich selbstverständlich auch zur unmittelbaren Justierung einer mit Justierkerben ausgestatteten Vorlage oder zur Befestigung einer mit Justierlöchern versehenen zusätzlichen Gleitfolie nutzen.

## Patentansprüche

1. Maske für einen Overheadprojektor mit einem ein Bildfenster durch je zwei Längs- und Querholme begrenzenden Rahmen (1), mit zur Ablage der Maske in einem Ordner dienenden Abheftlöchern (1) an einem der Längsholme sowie mit einem eine Reduzierung der Außenabmessungen während der Ablage ermöglichenden, von einem zu den Längsholmen parallelen Teil des Rahmens (1) gebildeten, umklappbaren Randabschnitt, dadurch gekennzeichnet, daß der umklappbare Randabschnitt (4) im Bereich der Querholme (5,6) des Rahmens gelenkig mit dem Hauptteil (3) des Rahmens (1) verbunden ist und daß am Hauptteil (3) des Rahmens (1) außerhalb des durch den umklappbaren Randabschnitt abdeckbaren Bereiches neben den einerseits zur Justierung des Rahmens (1) auf dem Projektor sowie andererseits zum Abheften der Maske in einem Ordner dienenden Abheftlöchern (11) Justierorgane (9,10) für eine auf die Maske auflegbare Folie und/oder Hülle (22) aus durchsichtigem Folienmaterial angeordnet sind.

2. Maske nach Anspruch 1, dadurch gekennzeichnet, daß die Justierorgane (9,10) pilzförmig ausgebildet sind.

3. Maske nach Anspruch 1 oder 2, dadurch gekennzeichnet, daß die Justierorgane (9,10) aus einem tellerförmigen Fußteil (14) mit sich an diesen anschließendem integralen Schaft (15) und einem nach Art eines Druckknopfes lösbar mit dem Schaft (15) verbundenen Kopfteil (17) bestehen.

4. Maske nach Anspruch 3, dadurch gekennzeichnet, daß der tellerförmige Fußteil (14) gegen die Unterseite des Rahmens (1) anliegt und der Schaft (15) durch ein seinem Durchmesser entsprechendes Loch des Rahmens (1) ragt.

5. Maske nach Anspruch 4, dadurch gekennzeichnet, daß der Kopfteil (18) mit einem den Schaft (15) des Fußteiles (14) umschließenden Ringbund (19) versehen ist, zwischen dessen Stirnseite und dem Fußteil (14) eine Ringzone des Rahmens (1) eingeklemmt ist.

6. Maske nach einem der Ansprüche 1 bis 4, dadurch gekennzeichnet, daß die anschweißbaren, aus Kunststoff bestehenden Justierorgane (9,10) durch Schweißen mit dem aus schweißbarer Kunststoffhartfolie bestehenden Rahmen (3) verbunden sind.

7. Maske nach einem der Ansprüche 1 bis 6, dadurch gekennzeichnet, daß sie an ihrer Unterseite mit Haftelementen (12,13) versehen ist.

8. Maske nach Anspruch 7, dadurch gekennzeichnet, daß die Haftelemente (12,13) von weichen Lackfolienstreifen (20) gebildet werden.

9. Maske nach Anspruch 8, dadurch gekennzeichnet, daß die Lackfolienstreifen (20) durch doppelseitig klebende, Polster bildende Klebebänder (21) mit dem Rahmen (1) verbunden sind.

10. Maske nach einem der Ansprüche 1 bis 9, dadurch gekennzeichnet, daß der umklappbare Randabschnitt (4) und der Hauptteil (3) des Rahmens (1) über Filmscharniere (7,8) miteinander verbunden sind.

11. Maske nach einem der Ansprüche 1 bis 10, dadurch gekennzeichnet, daß ihr Fenster (2) durch eine aus durchsichtiger Kunststoffolie bestehende Hülle (22) abdeckbar ist, die im Bereich ihres einen Längsrandes (26) mit den Schaft (15) der Justierorgane (9, 10) partiell umschließenden Führungs- bzw. Justierkerben (27,28) versehen ist.

12. Maske nach Anspruch 11, dadurch gekennzeichnet, daß die Hülle (22) an ihrem die Führungs- bzw. Justierkerben (27,28) aufweisenden Längsrand (26) mit zu ihrer Ablage in einem Ordner dienenden Löchern (25) versehen ist.

## Claims

1. A mask for an overhead projector with a frame (1) circumscribing an image window through two longitudinal and two transverse strips, with filing holes (11) along one longitudinal strip serving for storage of the mask in a file, and with a foldable peripheral section which enables a reduction in the external dimensions during storage, formed from a part of the frame (1) extending parallel to the longitudinal strips, characterised in that the foldable peripheral section (4) is articulated with the main part (3) of the frame (1) in the region of the transverse strips (5,6) of the frame and that, in addition to the filing holes (11) serving on the one hand for the alignment of the frame (1) on the projector and on the other hand for the filing of the mask in a file, adjusting elements (9,10) for a film and/or an envelope (22) of transparent film material which can be laid on the mask are arranged on the main part (3) of the frame (1) outside the region which may be covered by the foldable peripheral section.

2. A mask according to Claim 1, characterised in that the adjusting elements (9,10) have a mushroom shape.

3. A mask according to either Claim 1 or 2, characterised in that the adjusting elements (9,10) comprise a plate-shaped foot section (14) with an integral shaft (15) contiguous thereto and a head section (17) in the manner of a pushbutton connected to the shaft (15) such that it may be detached.

4. A mask according to Claim 3, characterised in that the plate-shaped foot section (14) abuts the underside of the frame (1) and that the shaft (15) projects through a hole in the frame (1) which corresponds in its diameter.

5. A mask according to Claim 4, characterised in that the head section (18) is provided with an annular collar (19) enveloping the shaft (15) of the foot section (14), with a ring zone of the frame secured between the front side of the annular collar (19) and the foot section (14).

6. A mask according to any one of Claims 1 to 4, characterised in that the weldable adjusting elements (9,10) of plastics material are connected to the frame (3) of weldable rigid plastics material foil through welding.

7. A mask according to any one of Claims 1 to 6, characterised in that its underside is provided with adhesive elements (12,13).

8. A mask according to Claim 7, characterised in that the adhesive elements (12,13) are formed from soft lacquered foil strips (20).

9. A mask according to Claim 8, characterised in that the lacquered foil strips (20) are connected to the frame (1) through cushion-forming, double-sided adhesive strips (21).

10. A mask according to any one of Claims 1 to 9, characterised in that the folding peripheral section (4) and the main part (3) of the frame (1) are connected to each other via film hinges (7,8).

11. A mask according to any one of Claims 1 to 10, characterised in that its window (2) may be covered by an envelope (22) of transparent plastic film, said envelope (22) provided in the region of one longitudinal border (26) with guide or aligning notches (27,28) partially embracing the shaft of the aligning elements (9,10).

12. A mask according to Claim 11, characterised in that the envelope (22) provided with holes (25) serving for its storage in a file on that longitudinal border (26) provided with the guide or adjusting notches (27,28).

## Revendications

1. Cache pour un rétroprojecteur comprenant un cadre (1) qui limite une fenêtre d'image par deux côtés longitudinaux et deux côtés transversaux, des trous d'accrochage (11) servant à ranger le cache dans un classeur, prévus le long d'un des côtés longitudinaux, ainsi qu'un segment de bord rabattable, qui permet de réduire les dimensions extérieures pour le rangement, et qui est formé par une partie du cadre (1) qui est parallèle aux côtés longitudinaux, caractérisé en ce que le segment de bord rabattable (4) est relié de façon articulée à la partie principale (3) du cadre (1) dans la région des côtés transversaux (5, 6) du cadre, et en ce que, sur la partie principale (3) du cadre (1) sont disposés, en dehors de la région pouvant être recouverte par le segment de bord rabattable, en supplément des trous d'accrochage (11) servant, d'une part, au repérage du cadre (1) sur le projecteur et, d'autre part, à l'accrochage du cache dans un classeur, des organes de repérage (9, 10) pour une feuille et/ou pochette (22) faite d'une matière en feuille transparente, qui peut être posée sur le cache.

2. Cache selon la revendication 1, caractérisé en ce que les organes de repérage (9, 10) sont en forme de champignon.

3. Cache selon la revendication 1 ou 2, caractérisé en ce que les organes de repérage (9, 10) sont composés d'une partie pied (14) en forme de disque, avec une tige (15) venue de matière, qui y fait suite, et une partie tête (17) fixée à la tige (15) de façon détachable, à la façon d'un bouton-pression.

4. Cache selon la revendication 3, caractérisé en ce que la partie pied (14) en forme de disque est appliquée contre la face inférieure du cadre (1) et la tige (15) fait saillie à travers un trou du cadre qui correspond à son diamètre.

5. Cache selon la revendication 4, caractérisé en ce que la partie tête (18) est munie d'un collet annulaire (19) qui entoure la tige (15) de la partie pied (14), une zone annulaire du cadre (1) étant serrée entre la face frontale de ce collet et la partie pied (14).

6. Cache selon une des revendications 1 à 4, caractérisé en ce que les organes de repérage (9, 10) soudables, composés d'une matière plastique, sont fixés par soudage au cadre (3) composé d'une feuille de matière plastique dure soudable.

7. Cache selon une des revendications 1 à 6, caractérisé en ce qu'il est muni d'éléments adhésifs (12, 13) sur sa face inférieure.

8. Cache selon la revendication 7, caractérisé en ce que les éléments adhésifs (12, 13) sont formés de bandes de pellicule de laque molles (20).

9. Cache selon la revendication 8, caractérisé en ce que les bandes de pellicule de laque (20) sont fixées au cadre (1) par des bandes adhésives (21), adhésives sur les deux faces, qui forment des coussins.

10. Cache selon une des revendications 1 à 9, caractérisé en ce que le segment de bord rabattable (4) et la partie principale (3) du cadre (1) sont assemblés entre eux par l'intermédiaire de charnières film (7, 8).

11. Cache selon une des revendications 1 à 10, caractérisé en ce que la fenêtre (2) peut être recouverte d'une pochette (22) composée d'une feuille de matière plastique transparente, qui est munie, dans la région d'un de ses bords longitudinaux (26) d'encoches de guidage et de repérage (27, 28) qui encadrent partiellement la tige (15) des organes de repérage (9, 10).

12. Cache selon la revendication 11, caractérisé en ce que la pochette (22) est munie, le long de son bord longitudinal (26) qui présente les encoches de guidage et de repérage (27, 28) de trous (25) qui servent à le ranger dans un classeur.
